(19) Europäisches Patentamt
European Patent Office
Office européen des brevets

(11) Publication number: **0 121 611**
**B1**

# (12) EUROPEAN PATENT SPECIFICATION

(45) Date of publication of patent specification: 25.04.90

(51) Int. Cl.[5]: C 25 B 1/26, C 25 B 1/16, C 25 B 1/46, B 01 D 61/46

(21) Application number: 83113236.0

(22) Date of filing: 30.12.83

## (54) Brine acidification with simultaneous production of alkali metal hydroxide and hydrochloric acid by 3-compartment electrodialytic water splitting.

(30) Priority: 14.03.83 US 474771

(43) Date of publication of application: 17.10.84 Bulletin 84/42

(45) Publication of the grant of the patent: 25.04.90 Bulletin 90/17

(84) Designated Contracting States: BE DE FR GB IT NL

(56) References cited:
EP-A-0 081 092
FR-A-2 399 457
GB-A-2 010 330
US-A-4 219 396

(73) Proprietor: ALLIED-SIGNAL INC. (a Delaware corporation)
Columbia Road and Park Avenue P.O. Box 2245R
Morristown New Jersey 07960 (US)

(72) Inventor: Mani, Krishnamurthy N.
c/o Allied Corporation P.O. Box 2245R
Morristown, NJ 07960 (US)
Inventor: Chlanda, Frederick P.
c/o Allied Corporation P.O. Box 2245R
Morristown, NJ 07960 (US)

(74) Representative: Brock, Peter William
URQUHART-DYKES & LORD 91 Wimpole Street
London W1M 8AH (GB)

EP 0 121 611 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to the production of acidified aqueous alkali metal chloride employing 3-compartment electrodialytic water splitting. The acidified aqueous alkali metal chloride can be employed as feed to an electrolytic cell for producing chlorine and alkali metal hydroxide.

In the electrolytic production of alkali metal hydroxides (sodium hydroxide and potassium hydroxide, especially, are produced by electrolytic techniques), the net reaction is

$$2MCl + 2H_2O \longrightarrow 2MOH + Cl_2 + H_2$$

with chlorine and hydrogen gases, respectively, removed from the anode and cathode compartments as gases. Mercury cell processes for this reaction are being supplanted by diaphragm and membrane processes, with two electrolytic chambers separated by, respectively, a diaphragm or membrane. In both membrane and diaphragm processes, aqueous salt solution is fed into the anode chamber and the product MOH is removed from the cathode chamber. The processes differ in that the diaphragm (e.g. asbestos) permits MCl to migrate into the cathode and thus becomes mixed with the product MOH, while the membrane (e.g. perfluorosulfonic acid resin) permits only sodium or potassium cations (and hydrogen ions) to migrate to the cathode chamber, causing the depleted brine to be removed separately from the anode chamber.

Hydroxide formed in the cathode chamber of both diaphragm and membrane processes has a tendency to migrate, at least in part, back through the diaphragm or membrane, to the anode. If unneutralized, hydroxide will cause a series of reactions leading to hypochlorite, chlorate and/or oxygen. These reactions are generally avoided by adding HCl to the brine feed to the cathode, thereby maintaining a pH in the cathode of between 0.5 to 6. Such acid may be formed by reacting product hydrogen with product chlorine, or as by-product of various processes employing chlorine. Both sources of HCl have disadvantages for many plants. For instance, the local need for hydrogen and chlorine may be sufficient to consume all of these gases that are produced. By-product Hcl often has impurities or has its own local demand (e.g. for iron pickling or oxychlorination or hydrochlorination). In other plants, the by-product HCl is not generated locally and must be purchased and transported back to the electrolytic plant.

Devices having stacked pairs of membranes have been suggested for various applications such as desalinization (US—A—3654125) and springing of sulfur dioxide from aqueous sulfite and bisulfife solutions (US—A—4082835) but such devices have no readily apparent application to the production of alkali metal hydroxides and chlorine.

EP—A—0081092 relates to the preparation of alkali metal hydroxide using a two-compartment water splitter.

One disadvantage of electrolytic cells for production of sodium hydroxide or potassium hydroxide is that the demand for these products, especially local demand, may exceed that for the chlorine by-product. If, for example, potassium hydroxide is produced in connection with fertilizer manufacture, the handling, packaging and shipment of by-product chlorine may, on the scale produced, be relatively uneconomical, Thus a need exists in certain localities for processes producing alkali metal hydroxides more efficiently alone, without the production of chlorine.

It has been found that an acidified brine for electrolytic cells may be generated from aqueous brine without the addition of HCl from an external source by use of three-compartment electrodialytic water splitting techniques utilizing alternating cation, bipolar, and anion membranes. The by-products are aqueous alkali metal hydroxide (e.g. NaOH or KOH) and aqueous hydrogen chloride (e.g. HCl) which may have a concentration substantially greater than concentration of HCl in the acidified brine. High efficiencies can be obtained based on the current used, while achieving HCl levels in the salt solution (0.1 to 2 weight percent HCl or 0.6—13 moles HCl per one hundred moles chloride salt) satisfactory for either diaphragm or membrane electrolytic processes for the production of additional alkali metal hydroxide and chlorine (as well as hydrogen). Thus the present invention provides a process for producing acidified aqueous alkali metal chloride feed comprising between 0.6 to 13 moles of HCl per 100 moles of alkali metal chloride for an anode compartment of a diaphragm or membrane electrolytic cell. According to the invention, the feed is produced in an electrodialytic water splitter comprising an anode and a cathode, positioned between which are at least two cation membranes, at least one bipolar membrane, and at least one anion membrane, thereby defining at least one base compartment located between a cation membrane and the anion face of a bipolar membrane and fed with a liquid comprising water, at least one acid compartment located between the cation face of said bipolar membrane and an anion membrane and fed with a liquid comprising water, and at least one salt compartment located between said anion membrane and a second cation membrane, and fed with an aqueous alkali metal chloride solution, whereby passage of a direct current through said water splitter causes acidification of said aqueous alkali metal chloride solution and acidification of said liquid comprising water in said acid compartment, basification of said liquid comprising water in said base compartment and transfer of alkali metal cations from said aqueous salt solution to said liquid comprising water in said base compartment, and transfer of chloride ions from said aqueous salt solution to said liquid comprising water in said acid compartment; and withdrawing a liquid comprising aaqueous alkali metal hydroxide from said base compartment, a liquid comprising aqueous

hydrogen chloride from said acid compartment and an acidified aqueous salt solution comprising between 0.6 and 13 moles of HCl per 100 moles of alkali metal chloride from said salt compartment to provide said feed.

Figure 1 illustrates a flow diagram of an embodiment of the process of the present invention in conjuction with a cation permselective membrane electrolytic process for the production of alkali metal hydroxide, chlorine, and hydrogen.

Figure 2 illustrates a flow diagram of another embodiment of the process of the present invention in conjuction with a conventional electrolytic diaphragm process for the production of alkali metal hydroxide, chlorine, and hydrogen.

Figure 3 illustrates a flow diagram of still another embodiment of the process of the present invention in conjuction with a cation permselective membrane process for the production of alkali metal hydroxide, chlorine, and hydrogen.

Figure 4 illustrates a flow diagram of a two-compartment electrodialytic water splitter process used to determine the effect of HCl concentration in the brine on current efficiency.

Figure 5 illustrates the mass transport of ions in the process operated in a two compartment electrodialytic water splitter of Figure 4.

Figure 6 illustrates a flow diagram of a two-compartment electrodialytic process used to determine leakage of $OH^-$ across a commercially available cation membrane.

Figure 7 illustrates a flow diagram of a two compartment electrodialytic process used to determine leakage of $H^+$ across a prior art anion membrane.

Figure 8 illustrates a flow diagram of an embodiment of the three-compartment electrodialytic water splitting process of the present invention.

Figure 4, 5, 6 and 7 illustrate results achieved with 2-compartment water splitters, and not 3-compartment water splitters which are essential to this invention. They are provided to illustrate membrane properties.

The 3-compartment water splitter used in the process of the present invention may be any of the devices described in US—A-4107015 and -4311771, for electrodialytic water splitting of sodium sulfate and for the production of electrical energy, respectively.

The 3-compartment water splitter incorporates a plurality of cation, bipolar, and anion ion exchange membranes arranged in an alternating fashion between two electrodes, an anode, and a cathode, to provide alternating base, acid, and salt compartments that form an electrodialysis stack. The construction of 2-compartment electrodialysis stacks is well known and, for example, units are available commercially from Asahi Glass Co., 1-2, Marunochi 2-chome, Chiyoda-ku, Tokyo, Japan; Ionics, Inc., Watertown, Massachusetts and other commercial sources. In general, 2-compartment stacks which are suitable for electrolyte concentration, such as the Asahi Model CU—IV, may be used for the water splitter. However, these commercially available 2-compartment units must be modified to include three compartments, base, acid and salt, and the membranes used therein must be of a kind adaptable to three-compartment water splitting. The three-compartment water splitter or its equivalent converts water into hydrogen and hydroxyl ion. The water splitter employs suitable bipolar membranes, that can be of the type described, for example, in U.S. Patent No. 2,829,095 to Oda et al., which has reference to water splitting generally, or in U.S. Patent No. 4,024,043 (single film bipolar membrane) or in U.S. Patent No. 4,116,889 (cast bipolar membrane), or any other type which effectively converts water into hydrogen and hydroxyl ions.

The cation membranes useful in the process of the present invention may be moderately acidic or strongly acid cation permselective membranes. Particularly useful cation membranes are Dupont's Nafion® acidic fluorocarbon membranes, especially Nafion® 110, 901 and 324 but other commercially available cation membranes (such as are available from Asahi Glass Co. or Asahi Chemical Industry Corp.) may also be used.

The anion membranes useful in the process of the present invention may be weakly basic or strongly basic anion exchange membranes. Particularly useful anion membranes are described in U.S. Patent No. 4,116,889 as well as commercially available membranes such as are available from Ionics Inc., Watertown, Massachusetts, and sold as Ionics 204—UZL—386, Asahi Glass Co. and sold under the trademark AMV anion membranes.

The current passed through the water splitter in conventional fashion is direct current of a voltage dictated by design and performance characteristics readily apparent to the skilled artisan and/or determined by routine experimentation.

The operation of the electrodialytic water splitter is further described below by reference to Fig. 1.

The aqueous alkali metal chloride solution fed via lines 100 into the salt compartments which are bounded by anion membranes and cation membranes 111 is preferably sodium chloride or potassium chloride, but may also be lithium chloride or even, conceivably, other alkali metal chlorides, or mixtures thereof. Generally it will have a pH between 6 and 13, with basic solutions (e.g. pH 8—12) being usually those coming from a purification step in which base (e.g. carbonate or hydroxide) has been added to impure, naturally occuring salt solution to precipitate polyvalent metals such as calcium, aluminum, magnesium and the like. The pH of the solution fed to the salt compartments is not critical.

The concentration of alkali metal chloride in the feed solution may be as low as 2 weight precent alkali metal chloride, and may be as high as the solubility of the alkali metal chloride in water. Preferably, the feed

solution is between 5 weight percent (more preferably 10 weight percent) and the saturation concentation of alkali metal chloride. Most preferably, especially since the acidified salt solution is to be fed to an electrolytic cell, the feed solution is saturated in alkali metal chloride.

Preferably, the feed solution is substantially free of other cations (e.g. Ca++, Mg++, Fe++ or Fe+++) that either will migrate across the cation membrane and precipitate in the by-product alkali metal hydroxide solution or will precipitate and foul the cation membrane. Preferably, since the acidified brine is to be fed to an electrolytic cell, the feed solution is also substantially free of anions other than chloride, such as bromide or sulfate, which may complicate the later operation of the electrolytic cell.

The liquid fed to the base compartments B, which are bounded by cation membranes and the anion side of bipolar membranes, may be water alone, or may be water with any of a variety of electrolytes in it. Preferably, this liquid is neutral or basic (pH 7—14) and more preferably it is aqueous sodium hydroxide of a concentration between 1 and 50 weight percent (more preferably between 5 and 25 weight percent). This concentration (the actual feed to the base compartments B) may be achieved by recycle, staging or a combination thereof as described in more detail in reference to the Figure below.

The liquid fed into acid compartments A, which are bounded by the cation side of bipolar membranes and anion membranes, may be water alone, or a portion of alkali metal chloride solution fed to the salt compartments S or may be water with any of a variety of electrolytes in it. Preferably, this liquid is neutral or acidic (pH 0—7) and more preferably is aqueous hydrogen chloride of a concentration between 0.2 and 20 weight percent and more preferably between 1 and 7 weight percent. This concentration (the actual feed in line 104 to the acid compartments A) may be achieved by recycle, staging or a combination thereof as described in more detail below. The liquid added to acid compartments may be even more dilute aqueous hydrogen chloride, or pure water, or a portion of the aqueous alkali metal chloride solution fed to the salt compartments or may be the aqueous hydrogen chloride obtained from the acid compartment of another three-compartment electrodialytic water splitter.

The current passed through the water splitter in conventional fashion is direct current of a voltage dictated by design and performance characteristics readily apparent to the skilled artisan and/or determined by routine experimentation. Current densities between 50 and 250 amps per square foot (between 55 and 270 milliamps per square centimeter) are preferred; and current densities between 80 and 150 amps per square foot (between 85 and 165 milliamps per square centimeter) are more preferred. Higher or lower current densities are contemplated, however, for certain specific applications.

The result of the current flow is electrodialytic water splitting to produce an acidified salt solution in the salt compartments (by leakage of $H^+$ ions from acid compartments A across the anion membranes 113a and 113b into the salt compartments S), a liquid comprising alkali metl hydroxide (of concentration greater than any in the feed liquid in line 102) in the base compartments, and a liquid comprising hydrogen chloride (of concentration greater than in the feed in line 104) in the acid compartments. It is contemplated that the flow rate out of the different compartments may be the same or different, and especially that the flow rates (or net flow rates after recycle) out of the acid and base compartments may be considerably slower than out of the salt compartments such that the hydroxide ion concentration in the product aqueous alkali metal hydroxide solution and the hydrogen ion concentration in the product aqueous hydrogen chloride solution are each substantially greater than the acid concentration in the product acidified alkali metal chloride solution.

Representative acid concentrations in the acidified alkali metal chloride are between 0.6 and 13 moles HCl per 100 moles alkali metal chloride, preferably between 1 and 10 moles HCl per 100 moles alkali metal chloride. If one starts with 25 weight percent sodium chloride, these ranges translate into products of 0.1—2% HCl, preferably 0.17—1.5% HCl, by weight. More preferred HCl concentrations depend upon the application. If the acidified brine is to be fed to a membrane cell, there is preferably 0.7—1.5% HCl. If the acidified brine is to be fed to a diaphragm cell, there is preferably 0.17—0.7% HCl. Of course, one may produce brine or higher HCl concentration and then mix the acidified brine with additional alkali metal chloride solution either in or upstream of the anode compartments of the electrolytic cells. Alternatively, when the HCl withdrawn from the acid compartments is mixed with the acidified brine, one may produce brine of lower HCl concentration.

The concentration of base withdrawn from the base compartments is greater than that fed, but is preferably between 5 and 40 weight percent.

The concentration of acid withdrawn from the acid compartments is between 0.2 and 20 weight percent, an acid concentration greater than the fed, and is preferably between 1 and 7 weight percent.

## Description of the Embodiments

Figure 1 illustrates a form of the process of the present invention. An electrodialysis stack 140 is shown with alternating cation membranes 111, bipolar membranes 112a and 112b and anion membranes 113 placed between an anode 112 and cathode 114. The cation membranes are first cation membrane 111a, second cation membrane 111b, third cation membrane 111c, fourth cation membrane 111d, and fifth cation membrane 111e. The bipolar membranes are first bipolar membrane 112a and second bipolar membrane 112b, each oriented with the cation permeable face towards the cathode 114. The anion membranes are first anion membrane 113a, and second anion membrane 113b. The electrodialysis stack may contain a greater number of membrane sets (frequently one hundred or more), but must contain at least two cation

membranes and at least one bipolar membrane and at least one anion membrane. An aqueous alkali metal chloride solution such as saturated sodium chloride is fed in stream 100 to the electrodialysis stack 140. A first portion 100a of aqueous salt stream 100 is fed between a side of first anion membrane 113a and a side of the third cation membrane 111c. Similarly, aqueous alkali metal salt stream 100b is fed between the sides of second anion membrane 113b and fourth cation membrane 111d. Simultaneously, a water stream, which may contain minor amounts of various electrolytes, and especially low concentrations of alkaki metal hydroxide, is fed to electrodialysis stack 140 through stream 102a between cation membrane 116 and the anion permeable (negative) side of bipolar membrane 112a, in stream 102b to between cation membrane 111b and the negative side of bipolar membrane 112b. Simultaneously, a water stream 104, which may contain minor amounts of various electrolytes, especially now concentrations of aqueous hydrogen chloride, is fed to electrodialysis stack 140 through stream 104a to between anion membrane 113a and the cation (positive) side of bipolar membrane 112a. A salt solution such as aqueous sodium sulfate is fed to the compartments adjacent the anode and cathode in streams 116a and 118a from a reservoir, and returned from these compartments to the reservoir after degassing to remove hydrogen and oxygen. More conveniently, an alkali metal chloride solution is fed in stream 116a to the compartment adjacent to the anode and water containing alkali metal hydroxide is fed in stream 118a to the compartment adjacent to the cathode. Current is passed between anode 112 and cathode 114 through the electrodialysis stack 140, causing alkali metal cation to migrate toward the cathode across the cation membranes 111a, 111b, 111c, 111d, and 111e, and causing chloride anions to migrate toward the anode across the anion membranes 113a and 113b. At bipolar membranes 112a and 112b, water is split such that protons migrate into the compartments to which the chloride anions have migrated, while hydroxide anions migrate from the minus side of the bipolar membranes into the same compartments as the alkali metal cations have migrated into. Accordingly, alkali metal hydroxide is formed in each of the compartments between a cation membrane and the minus (anion) side of a bipolar membrane, and this alkali metal hydroxide is withdrawn from the electrodialysis stack 140 through streams 103a, and 103b and collected in stream 133 as aqueous alkali metal hydroxide. If stream 102 contains electrolytes, they will normally still be present in stream 133; in particular, if stream 102 contains a low concentration of alkali metal hydroxide, stream 133 will contain a higher concentration of alkali metal hydroxide.

The acid compartments between the positive side of each bipolar membrane and the adjacent anion membrane will now contain hydrochloric acid and, in another embodiment, alkali metal chloride when at least a portion of the alkali metal chloride solution in stream 100 is fed to the acid compartments. This aqueous HCl/alkali metal chloride is withdrawn from these compartments A in streams 105 and 105b. The HCl/alkali metal chloride streams are combined as a second product in stream 135.

The compartments between a face of anion membranes 113 and a face of cation membranes 111 will still contain alkali metal chloride at high concentration, but will be somewhat depleted in alkali metal and enriched in protons, such that the alkali metal chloride will now be acidified. This acidified alkali metal chloride is withdrawn from these salt compartments S in streams 101a and 101b. The acidified alkali metal chloride streams are combined as a stream 131, which is forwarded to the anode compartments of a series of cation permselective membrane electrolytic cells 130a, 130b, and 130c.

A portion of the acidified alkali metal chloride in stream 131 is fed in stream 131a to the anode compartment of permselective membrane cell 130a wherein chlorine is generated. The alkali metal cations in the solution pass through the cation permselective membrane into the cathode compartment wherein hydrogen is generated, leaving a mixture of alkali metal hydroxide and alkali metal chloride which is withdrawn from cell 130a in stream 132a.

Figure 2 illustrates the use of the present process in conjuction with a conventional electrolytic diaphragm process for the production of alkali metal hydroxide, chlorine and hydrogen. A stream of alkali metal chloride of high concentration, such as saturated sodium chloride in stream 200, if fed in streams 200a and 200b to electrodialysis stacks 240 and 260, each of which operates in a manner similar to that of electrodialysis stack 140 in Figure 1. Dilute base is fed in stream 202 to the base compartments B of electrodialysis stack 240 between the negative side of each bipolar membrane and the adjacent cation membrane, such as shown for streams 102a and 102b in Figure 1. Water or dilute HCl is fed in stream 204 to the acid compartments A of the electrodialytic stack 240 between the positive (cation) side of each bipolar membrane and the adjacent anion membrane, such as shown for streams 104a and 104b in Figure 1. Through the passage of current across electrodialysis stack 240, the aqueous alkali metal chloride in feed stream 200 is caused to be depleted of alkali metal cations, which are partially replaced with protons which leak through the anion permselective membranes, such that an acidified aqueous brine solution is formed and withdrawn from these salt compartments S and combined into stream 231a. The flow rates into the dialysis stacks 240 and 260 through streams 200a and 200b, and out of the dialysis stacks 240 and 260 through streams 231a and 231b, are such that streams 231a and 231b (and combined stream 231) will contain approximately 1—10 moles HCl per 100 moles alkali metal chloride. In the acid compartments of stack 240, chloride ions from the salt compartments are introduced into the aqueous HCl while hydrogen ion from the electrodialytic water splitting is also introduced. The HCl solution removed from acid compartments in stream 205, much as the HCl removed in streams 101a and 101b in Figure 1, contains a higher concentration of HCl. A portion of the HCl in stream 205 may be removed as product, fed to stack 260 via stream 215 or combined with stream 231. In the B compartments of stack 240, alkali metal cations from

the salt solution are introduced into the aqueous base, while hydroxide from the electrodialytic water splitting is also introduced. Accordingly, the material removed from these base compartments in stream 203, much as the material removed in streams 103a and 103b of Figure.1, contains a higher concentration of alkali metal hydroxide. A portion of stream 203 is fed to a reservoir 220 of dilute aqueous base, which is replenished by a small stream of water through stream 221. The remainder of base steam 203 is fed in stream 219 to a second base reservoir 224, which will contain a higher concentration of alkali metal hydroxide. From reservoir 224, base is withdrawn in stream 226 and fed to the base compartments of electrodialysis stack 260 between the (minus) anion side of each bipolar membrane and the adjacent cation membrane, in the same manner as streams 102a and 102b in Figure 1. The operation of the electrodialysis stack causes more alkali metal and more hydroxide to be introduced into this base, such that a base of still higher concentration is withdrawn from the electrodialysis stack 260 from these compartments and combined in stream 218. A portion of stream 218 is taken as product stream 222 of the desired high concentration of alkali metal hydroxide. The remainder of stream 218 is recycled to vessel 224 so as to mix with the more dilute aqueous alkali metal hydroxide from stream 219 and maintain a consistent concentration in vessel 224 for feeding through stream 226 to electrodialysis stack 260.

The acidified aqueous alkali metal chloride solutions, which optionally may contain HCl from stream 205 from stack 240 and/or from stream 217 from stack 260 in streams 231a and 231b are combined in feed stream 231 to a series of conventional diaphragm electrolytic cells, illustrated by cells 230a, 230b, and 230c in Figure 2. A portion of stream 231 is feed in stream 234a to the anode compartment of diaphragm cell 230a where chlorine is generated. The solution passes through the diaphragm into the cathode where hydrogen is generated, leaving a mixture of alkali metal hydroxide and alkali metal chloride which is withdrawn from cell 230a in stream 232a. Because of the inefficiency of the diaphragm, however, some hydroxide formed in the cathode compartment will tend to leak back into the anode compartment, and would cause undesired by-products such as hypochlorite to be generated along with the chlorine. Because, however, the aqueous alkali metal chloride fed in stream 234a is acidified, any such hydroxide that migrates back through the diaphragm will be neutralized before reaching the anode. In similar fashion, acidifed alkali metal chloride streams 234b and 234c are fed to diaphragm cells 230b and 230c, where chlorine is generated at the anode and hydrogen is generated at the cathode, with mixtures of alkali metal chloride and alkali metal hydroxide withdrawn from the cathode compartments in streams 232b and 232c. Streams 232a, 232b, and 232c are combined into stream 232, from which product alkali metal hydroxide and by-product deplated alkali metal chloride are separated in a conventional fashion.

Figure 3 illustrates the practice of the present electrodialysis process in conjunction with a conventional electrolytic membrane cell. A source of aqueous alkali metal chloride, such as saturated sodium chloride, is fed in streams 300a and 300b to electrodialysis stacks 340 and 360, each constructed of alternating cation membranes, bipolar membranes, and anion membranes, with the aqueous alkali metal chloride fed to the salt compartments S between a side of each anion membrane and the adjacent cation membrane in the manner of streams 100a and 100b of Figure 1. Dilute alkali metal hydroxide from vessel 320 is fed in streams 316a and 316b to the base compartments B of electrodialysis stacks 340 and 360 between the anion (minus) side of each bipolar membrane and the adjacent cation membrane in the manner of streams 102a and 102b of Figure 1. Water or dilute HCl or an aqueous alkali metal chloride is fed in stream 304 to the acid compartments A of the electrodialytic stack 340 between a cation (positive) side of each bipolar membrane and the adjacent anion membrane, such as shown for streams 104a and 104b in Figure 1. Accordingly, the alkali metal chloride is acidified by removal of alkali metal cations and increase of protons by leakage of protons from A through the anion membranes to S, both in electrodialysis stack 340 and electrodialysis stack 360, and the acidified alkali metal chloride streams are removed and collected in streams 331a and 331b, which are combined into stream 331 which typically contains 1—10 moles of HCl per 100 moles alkali metal chloride.

The alkali metal hydroxide formed in each base compartment B of electrodialysis stack 340 and electrodialysis stack 360 between the anion (minus) side of a bipolar membrane and the adjacent cation membrane are all withdrawn and combined into streams 303a (from electrodialysis stack 340) and 303b (from electrodialysis stack 360). Both streams 303a and 303b are fed back to vessel 320. Water is fed into vessel 320 through stream 321 so as to maintain the alkali metal hydroxide concentration in vessel 320 relatively constant. The portion of aqueous alkali metal hydroxide withdrawn from vessel 320 not fed in streams 316a and 316b if fed in stream 318 to electrolytic membrane cells 335a, 335b, and 335c. Dilute aqueous alkali metal hydroxide stream 318 is split into three streams, each fed to a cathode compartment of an electrolytic membrane cell, illustrated by stream 336c, fed to the cathode compartment of electrolytic cell 335c. Similarly, acidified alkali metal chloride stream 331 is split into three portions, streams 331a, 331b and 331c, which are fed, respectively, to the anode compartments of electrolytic membrane cells 335a, 335b, and 335c. In the acid compartments of stack 340, chloride ions from the salt compartments S are introduced into the water or aqueous HCl while hydrogen ions from the electrodialytic water splitting are also introduced. The HCl solution removed from the acid compartments in stream 305, much as the HCl removed in streams 101a and 101b in Figure 1 contains a higher concentration of HCl. A portion of the HCl in stream 305 may be removed as product, fed to stack 360 via 317 or combined with stream 331.

In electrolytic membrane cell 335c, chlorine is generated from the acidified aqueous alkali metal chloride in the anode compartment, and hydrogen is generated from the dilute aqueous alkali metal

hydroxide in the cathode compartment. Alkali metal cations migrate from the anode compartment to the cathode compartment such that the material remaining in the anode compartment is a depleted or more dilute alkali metal chloride solution which is withdrawn from each anode compartment and combined in stream 338, and optionally used to dissolve additional solid alkali metal chloride to regenerate the salt solutions used for streams 300a and 300b. In each cathode compartment, alkali metal hydroxide streams of increased concentration are generated, removed, and combined as product stream 337.

To a greater extent than in diaphragm cells, membrane cells have a tendency to have leakage of hydroxide from the cathode compartments across the membranes to the anode compartments. If the aqueous alkali metal chloride fed to the anode compartments was not acidified, this hydroxide would cause the generation of hypochlorite or other by-product with the chlorine from the anode compartments. Since, however, the alkali metal chloride fed in stream 331 thorugh lines 334a, 334b and 334c to the electrolytic membrane cells is acidified, any hydroxide migrating across the membranes in the electrolytic membrane cell would be neutralized before reaching the anode.

A preferred modification of the embodiment of Figure 3 is to feed the salt solution as well as the base through electrodialysis stacks 340 and 360 in series. This would be accomplished by feeding incoming salt solutions in stream 300a, and not stream 300b, feeding acidified salt solution from stream 331a to stream 300b and feeding further acidified salt solution in stream 331b only to stream 331 and thence to the electrolytic cells. By matching the highest strength base and most acidified salt solution in electrodialysis stack 360, overall efficiencies are improved.

It should be appreciated that in both Figures 2 and 3, the alkali metal hydroxide generated in the electrodialysis of stacks 240 and 260 and 340 and 360, respectively is in addition to alkali metal hydroxide generated in the electrolytic cells. In Figure 2, the alkali metal hydroxide generated from the electrodialysis stacks is removed as a separate product stream 222. In the process of Figure 3, this alkali metal hydroxide is fed in stream 318 to the electrolytic cells, and thus stream 337 contains both the alkali metal hydroxide formed from water splitting and that formed in the conventional electrolytic reaction.

## Examples

Following are Examples I—VI. Examples I—IV were run to determine values for mass transport across individual membranes and current efficiency to form a basis for comparison with Examples V—VI which illustrate the process of the present invention. Examples I and II were run using a two compartment water splitter to determine the effect of HCl concentration on current efficiency. Examples III—IV were run to determine the properties such as $OH^-$ and $H^+$ leakage of commercially available cations and anion membranes respectively.

### Example I

The transport ratio of $H^+/Na^+$ across a commercial cation membrane, the perfluorosulfonic acid membrane manufactured by DuPont and designated as Nafion 324 was determined, as a function of HCl concentration in the brine in the cell shown schematically in Figure 4.

An electrodialysis cell of Figure 4 consisting of polyfluorocarbon cylinders (not shown) was assembled to form five compartments: Anolyte, first base, acid, second base, and catholyte ($E_a$, $B_1$, A, $B_2$, $E_c$, respectively). The compartments were separated by ion exchange membranes as follows: Nafion 110 (511h) between Ea and $B_1$; Nafion 110 (511j) between $B_2$ and $E_c$; Nafion 324 (511i) between A and $B_2$; bipolar membrane 512f made in accordance with U.S. Patent 4,116,889 with cation exchange side facing acid compartment A and cathode 510c. The ends of the cell were sealed with polyfluorocarbon end plates (not shown) to which were attached the anode 510a and cathode 510c which were circular platinum disks. The exposed area of each membrane in the cell was 11 $cm^2$.

Solution was circulated to the first base and second base compartments from base reservoir 520 by means of a pump 521 and the solution exiting first base and second base compartments was returned to base reservoir 520. In a similar manner a separate electrolyte reservoir and pump (not shown in the figure) were used to circulate a solution to the anolyte and catholyte compartments. Solution was circulated to the acid compartment by means of pump 533. Additional solution was added to the acid compartment by metering pump 532 which was supplied from acid reservoir 531. The addition of solution from acid reservoir 530 caused an overflow of solution to occur from overflow tube 535 connected in the acid compartment A; the overflow was collected and saved for analysis. The base reservoir 520 was equipped with a pH probe to monitor the pH of the solution.

Solutions were circulated through the cell from external reservoirs. The electrode compartments Ea and Ec were charged with 1 L of 0.5 M $Na_2SO_4$. The B (base) reservoir, 520, was charged with 500 mL of 1M NaCl and the A (acid) reservoir 531 was charged with 200 mL of 25 weight percent NaCl. The acid loop between the acid compartment and A reservoir was filed with 35 mL of 25 weight percent of NaCl. The pumps connected to reservoirs were turned on and a direct current of 1.20A was passed.

Samples of the overflow from the acid compartment were collected and analyzed for HCl by titration with standard NaOH. Some of the titrated samples were evaporated to dryness and weighed to determine the concentration of NaCl in the acid. At intervals, measured amounts of standard 1 N HCl were added to the B reservoir (neutralizing the NaOH formed in the B cell) until pH 3 was reached. The pH of the B reservoir then rose due to the production of NaOH. The time at which pH 7 was reached was recorded.

From the length of time between successive recorded times and the amount of HCl added to the B reservoir, the current efficiency for production of base could be determined by the formula:

$$\text{Current Efficiency} = \frac{96.5 \times \text{mL acid added} \times \text{normality of acid added}}{\text{current in amperes} \times \text{seconds between recorded times}}$$

In this way as the acidity in the acid (brine) increased, the efficiency for base generation could be determined. The current efficiency for base generation as a function of the molar ratio of HCl to NaCl in the acid (brine) is shown in Table I.

The current efficiency for base production is related to the ratio of $H^+/Na^+$ transport across cation membrane 22, as will be understood by reference to Fig. 5 which shows the major mass transport processes which occur during operation of the cell in Fig. 5. $H^+$ band $OH^-$ are produced by the bipolar membrane 512f in equal amounts. If the bipolar membrane is perfectly selective, 1 equivalent of $OH^-$ and $H^+$ will be produced for each Faraday of current passed (current efficiency = 1). Since the membrane is not perfectly selective, this efficiency will be somewhat less than 1 due to the transport of $Na^+$ and $Cl^-$ across the membrane. Since acid compartment A contains both $H^+$ and $Na^+$ cations these will both be transported across Nafion® 324 cation membrane 511i. Essentially only $Na^+$ is transported across Nafion® 110 cation membranes 511h and 511j because the $H^+$ concentration in base compartment $B_2$ and in anolyte Ea is kept very low. Since base compartments $B_1$ and $B_2$ are connected, the $H^+$ migrating across Nafion® 324 cation membrane 511i will react with a portion of the $OH^-$ produced by the bipolar membrane. At very low HCl concentrations in acid compartment A, essentially no $H^+$ will be transported across membrane 511i and the efficiency for $OH^-$ production ($\eta_{OH^-}$) will be the efficiency of the bipolar membrane for water splitting ($\eta_o$). As the $H^+$ concentration in the acid compartment A increases, part of the current will be carried across Nafion® 324 cation membrane 511i by $H^+$ ion, react with $OH^-$ ion and therefore lower the efficiency for base production. In terms of current efficiencies ($\eta$) $\eta_{H^+} = \eta_o - \eta$ where $\eta_{H^+}$ is the efficiency with which $H^+$ is carried across Nafion 324 cation membrane 511i, $\eta_o$ is the bipolar membrane efficiency and $\eta$ is the observed efficiency for base production. If the Nafion® 324 cation membrane 511i is perfectly selective, the current efficiency for $Na^+$ transport will be $1-\eta_{H^+}$ hence the ratio of $Na^+/H^+$ transported across Nafion® 324 membrane 511i is given by the following equation:

$$\frac{\eta_{H^+}}{\eta_{Na^+}} = \frac{\eta_o - \eta}{1 - \eta_o + \eta} \qquad \text{Eq. I-1}$$

If the proportion of $H^+$ to $Na^+$ transported is directly proportional to the ratio of solution concentrations, then we might expect

$$\frac{\eta_{H^+}}{\eta_{Na^+}} = K \left[\frac{\text{conc. } H^+}{\text{conc. } Na^+}\right]_{\text{solution}} \qquad \text{Eq. I-2}$$

It is of no consequence to the present invention whether the transport ratio of $H^+/Na^+$ obeys the above relationship since the ratio can be found by experimentation but adherence to the relationship simplifies calculation and design of the water splitting system.

The results of the experiment are shown in Table I. Also shown in the Table I are values of the current efficiency calculated from Eq. I—1 and I—2 for K = 3.174 and $\eta_o$ = 0.97.

TABLE I

Brine Composition(1)

| Time (sec) | Total HCl (mL) Added | mmoles/g HCl | mmoles/g NaCl | η[2] | η[3] Calc. |
|---|---|---|---|---|---|
| 0 | 0 | - | - | - | - |
| 279 | 10 | .039 | 4.16 | .942 | .941 |
| 425 | 15 | .091 | 4.11 | .900 | .904 |
| 574 | 20 | .121 | 4.09 | .882 | .884 |
| 727 | 25 | .154 | 4.08 | .859 | .863 |
| 884 | 30 | .184 | 4.06 | .837 | .844 |
| 1043 | 35 | .213 | 4.05 | .826 | .827 |
| 1206 | 40 | .237 | 4.04 | .806 | .813 |
| 1369 | 45 | .260 | 4.03 | .806 | .800 |
| 1535 | 50 | .281 | 4.02 | .792 | .788 |
| 1703 | 55 | .300 | 4.01 | .782 | .778 |
| 1873 | 60 | .315 | 4.01 | .773 | .770 |
| 2044 | 65 | .330 | 4.00 | .768 | .762 |
| 2217 | 70 | .343 | 3.99 | .760 | .756 |
| 2392 | 75 | .356 | 3.99 | .751 | .749 |
| 2567 | 80 | .367 | 3.98 | .751 | .744 |
| 2745 | 85 | .375 | 3.98 | .738 | .740 |
| 2922 | 90 | .383 | 3.97 | .742 | .736 |

1 Average for the Time Interval at which pH 7 was reached.

2 Current efficiency experimentally determined.

3 Current efficiency calculated.

Example II

This experiment was run in the apparatus and in accordance with the procedure of Example I except that the acid reservoir and acid loop were charged with 2% HCl/23% NaCl. The results are shown in Table II along with the calculated values of η using $\eta_0 = .97$ and $K = 3.174$.

TABLE II

BRINE COMPOSITION

| Time[1] (sec) | Total HCl (mL) Added | mmoles/g HCl | mmoles/g NaCl | $\eta^2$ | $\eta^3$ Calc. |
|---|---|---|---|---|---|
| 0 | 0 | - | - | - | - |
| 228 | 5 | .780 | 3.79 | .576 | .575 |
| 463 | 10 | .826 | 3.77 | .559 | .560 |
| 703 | 15 | .868 | 3.75 | .548 | .546 |
| 946 | 20 | .902 | 3.73 | .541 | .536 |
| 1194 | 25 | ..928 | 3.71 | .530 | .527 |
| 1447 | 30 | .946 | 3.70 | .519 | .522 |

1 Average for Time Interval at which pH 7 was reduced

2 Experimentally determined

3 Calculated

Example III

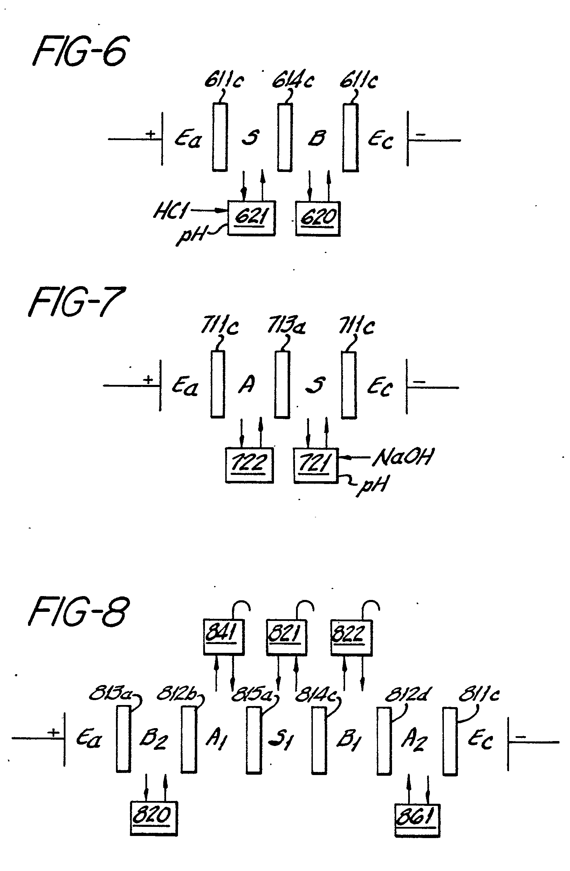

The leakage of $OH^-$ across the commercially available Nafion® 324 cation membrane into the brine was determined in the cell shown in Figure 6. The membranes used were Dupont's Nafion® 110 cation membranes for membranes 611c and Dupont's Nafion® 324 cation membrane for membrane 614c. The following solutions were circulated through the cell from external reservoirs: 1 L of 0.5 M $Na_2SO_4$ to Ea and Ec; 170 mL of 25 weight % NaCl to salt compartment S from reservoir 621 equipped with pH probe; and 200 g of 20 weight % NaOH to base compartment B from reservoir 620. A direct current of 1.2 amperes was passed. Water was metered into B via 620 and samples were removed from 620 for titration with standard HCl. the pH in the salt (brine), which rose due to migration of $OH^-$ across 614c, was recorded. At intervals, measured amounts of 1.002N HCl were added to salt reservoir 621 (neutralizing NaOH present therein) until the pH returned to 7. The times at which pH 7 was reached were recorded. From the length of time between successive recorded times and the amount of HCl added to 621, the current efficiency for $OH^-$ transport, $\eta_{OH^-}$, was determined using the formula recited in Example II. The efficiency for $Na^+(\eta)$ is $1-\eta_{OH^-}$. The results are reported in Table III. In this way the leakage of $OH^-$ across the Nafion® 324 membrane to the salt compartment can be determined as a function of NaOH concentration.

TABLE III

| Time (sec) | Total mL of HCl Added | η | % NaOH |
|---|---|---|---|
| 0 | 0 | - | - |
| 210 | 0.53 | .797 | 19.25 |
| 529 | 1.31 | .803 | 18.75 |
| 824 | 2.01 | .809 | 18.20 |
| 1215 | 2.90 | .817 | 17.62 |
| 1531 | 3.61 | .819 | 17.06 |
| 1858 | 4.31 | .828 | 16.58 |
| 2185 | 5.00 | .830 | 16.13 |
| 2557 | 5.75 | .838 | 15.66 |
| 2941 | 6.49 | .845 | 15.19 |
| 3345 | 7.25 | .848 | 14.73 |
| 3756 | 8.00 | .853 | 14.28 |
| 4185 | 8.75 | .859 | 13.84 |

Example IV

The leakage of $H^+$ across an anbion membrane 713a prepared in accordance with Example 3 of U.S. Patent 4,116,889 to Chlanda was determined in the cell shown in Figure 7. Dupont's Nafion® 110 cation membranes were used for membranes 711c. The following solutions were circulated through the cell: 2L of 0.5 M $H_2SO_4$ to Ea and Ec; 200 mL of 7% HCl to acid compartment A via acid reservoir 722; and 170 mL of 25 weight % NaCl to salt compartment S via reservoir 721. A direction current of 1.2 amperes was passed. Water was metered to A via 722 and samples were removed from 722 for titration with standard NaOH. The pH in the salt (brine) which decreased due to transport of $H^+$ across 713a, was recorded. At intervals, measured amounts of 1.067 *M* NaOH in 25% NaCl were added to the salt reservoir 721 (neutralizing HCl formed) until the pH reached 7. The times at which pH 7 was reached were recorded. From the length of time between successive recorded times and the amounts of NaOH added to 721, the current efficiency for $H^+$ transport, $\eta_H{}^+$ was determined using the equation recited in Example II. The efficiency of the anion membrane 713a for $\eta_{Cl}{}^-$ transport was determined by the following formula:

$$\eta_{Cl^-} = 1 - \eta_{H^+}$$

The results are reported in Table IV. In this way the leakage of $H^+$ across the anion membrane to the salt compartment as a function of HCl concentration can be determined.

TABLE IV

| Time (sec) | Total mL of HCl Added | n | % HCl |
|---|---|---|---|
| 0 | 0 | - | - |
| 149 | 0.96 | .447 | 6.50 |
| 297 | 1.92 | .443 | 6.42 |
| 456 | 2.92 | .460 | 6.34 |
| 616 | 3.93 | .458 | 6.26 |
| 781 | 4.95 | .470 | 6.18 |
| 945 | 5.96 | .472 | 6.10 |
| 1116 | 6.98 | .488 | 6.02 |
| 1284 | 8.00 | .479 | 5.94 |
| 1529 | 9.44 | .496 | 5.85 |
| 1624 | 10.00 | .494 | 5.78 |
| 1789 | 10.96 | .501 | 5.72 |
| 1972 | 12.00 | .512 | 5.65 |
| 2148 | 12.98 | .522 | 5.58 |
| 2329 | 13.98 | .526 | 5.51 |
| 2514 | 15.00 | .527 | 5.44 |
| 2700 | 16.00 | .539 | 5.37 |
| 2891 | 17.02 | .542 | 5.30 |
| 3070 | 17.99 | .535 | 5.23 |
| 3270 | 19.00 | .567 | 5.16 |
| 3462 | 20.00 | .553 | 5.10 |
| 3659 | 20.98 | .573 | 5.03 |
| 3860 | 22.00 | .565 | 4.97 |

Example V

The current efficiencies for generating HCl and NaOH are determined in the three-compartment electrodialytic water splitter illustrated schematically in Figure 8. No withdrawal from salt compartment S is made. The following membranes, each having an exposed area of 11 $cm^2$, are used: Ionics 204—UZL—386 anion membrane for membrane 813a; a bipolar membrane prepared in accordance with U.S. Patent 4,116,889 to Chlanda et al. is used for membranes 812b and 812d; anion membrane (amino-cross-linked polystyrene polyvinyl benzylchloride copolymer) prepared in accordance with Example 3 of U.S. Patent 4,116,889 to Chlanda et al. is used for membrane 814a; Dupont's Nafion® 324, a cation permselective membrane, is used for membrane 814c; and Dupont's Nafion® 110, another cation permselective membrane, is used for membrane 811c. The following solutions are charged to the cell: 4 L of 0.5 M $Na_2SO_4$ from a common reservoir (not shown) to Ea and Ec; 6 L of 15 weight percent aqueous NaOH from reservoir 820 to base compartment $B_2$; and 6 L of 4.7 weight percent aqueous HCl from reservoir 861 to acid compartment $A_2$. Compartments $A_2$ and $B_2$ serve to isolate the unit three compartment water splitting cell formed of $A_1$, $S_1$ and $B_1$ and the cation side of 812b, 815a, 814c, and the anion side of 812d so that the environment of the membranes is similar to what it might be in a multichamber cell containing many unit cells. The following feed loops and reservoirs: between $A_1$ and reservoir 841; between $S_1$ and reservoir 821; between B and reservoir 822; are each charged with 40 mL of 4.6 weight percent aqueous HCl, and 25 weight percent aqueous NaCl and 9.0 weight percent aqueous NaOH, respectively. Reservoirs 841, 821 and

822, are each equipped with overflow tubes so that volumes containing therein remain constant. Water is metered in to $A_1$ and reservoir 841 at a constant rate of 2.800 g/1000 sec. Water is metered into $B_1$ and reservoir 822 at a constant rate of 0.615 g/1000 sec. A direct current of 1.2 ampheres is passed for 24 hours. During this time, a 20.35% aqueous NaCl is added to reservoir 821 and $S_1$ at a rate of 1.785 g/1000 sec, sufficient to maintain a constant volume in reservoir 821 and loop S, but not to cause an overflow from resevoir 821. No withdrawal is made from salt compartment S. The composition of solutions $B_2$ and $A_2$ are unchanged, within experimental error. The overflow rates and compositions would be stabilized at the values listed in Table V hereinbelow.

TABLE V

Overflow Rates and Composition of Cell in Figure 8 after 24 hrs.

| Compartment | Overflow Rates (g/1000 sec.) | Composition of Output (weight %) |
|---|---|---|
| $A_1$ | 3.642 | 5.85% HCl, 0.30% NaCl |
| $B_1$ | 1.560 | 15.00% NaOH, 0.70% NaCl |
| $S_1$ | 0 | 20.35% NaCl, 4.53% of HCl |

Based on the above calculations, the production rate of HCl therefore is 3.642 × 5.85/100 = 0.2131 g/1000 sec (5.85 mmoles/1000 sec) and of NaOH 1.560 × 15.00/100 = 0.234 g/1000 sec (5.85 mmoles/1000 sec). The theoretical production rate for HCl is 1.20A × 1000 sec/96.5 coul/mF = 12.44 mmoles/1000 s therefore NaOH and HCl are each produced with a current efficiency of 0.47.

The calculated results are consistent with the values for mass transport across the individual membranes determined in Examples I—IV.

Example VI

The current efficiencies for generating HCl, NaOH and acidified brine (NaCl/HCl) are determined in the three compartment cell (Figure 8) and in accordance with the procedure of Example V except that the flow rate to $S_1$ is 21.9 g of 23.61 weight % NaCl/1000 sec.; aqueous brine is withdrawn from $S_1$; and the flow rate of $H_2O$ to $B_1$ is increased to 1.459 mL of $H_2O$/1000 sec.

After 24 hrs., the over flowrates and compositions would be stabilized to the values listed in Table VI herein below.

TABLE VI

Overflow Rates and Composition of Cell in Figure 8 after 24 hrs.

| Compartment | Overflow Rates (g/1000 sec.) | Composition of Output (weight %) |
|---|---|---|
| $A_1$ | 3.641 | 5.85% HCl, 0.30% NaCl |
| $B_1$ | 2.719 | 15.00% NaOH, 0.40% NaCl |
| $S_1$ | 19.83 | 23.00% NaCl, 0.80% of HCl |

The production rate of NaOH is 2.719 × 15.00/100 = .408 g/1000S (10.20 mmoles/1000 sec.). HCl is produced in $A_1$ at a rate of 3.642 × 5.85/100 = .213 g/1000 sec (5.85 mmoles/1000 sec) and in $S_1$ at a rate of 19.83 × .80/100 = .159 g/1000 sec (4.35 mmoles/1000 sec). In theory acid and base are produced at a rate of 1.20 A × 1000S/96.5 coul/mF = 12.44 mmoles/1000 sec. The current efficiency for NaOH production is therefore 0.82. The current efficiency for HCl production from $A_1$ is therefore 0.47 and from $S_1$ the current efficiency for HCl production is 0.35.

The calculated results are consistent with the values for mass transport across the individual membranes determined in Examples I—IV.

By comparison of the expected current efficiencies in Example V: $\eta_H+ = \eta_{OH}- = 0.47$) and with those calculated in Example VI: ($\eta_H + = 0.47$, $\eta_{NaCl} = 0.35$, $\eta_{OH}- = 0.82$), an improved water splitting performance

would be expected if the acidified salt solution should be withdrawn from the salt compartment. The total current efficiencies for producing HCl (0.47 + 0.35) and for producing NaOH (0.82) would be higher than the current efficiencies for producing only HCl and NaOH in the three-compartment cell of Example V.

## Claims

1. A process for producing acidified aqueous alkali metal chloride feed comprising between 0.6 and 13 moles of HCl per 100 moles of alkali metal chloride for an anode compartment of a diaphragm or membrane electrolytic cell, characterized in that said feed is produced in an electrodialytic water splitter comprising an anode and a cathode, positioned between which are at least two cation membranes, at least one bipolar membrane, and at least one anion membrane, thereby defining at least one base compartment located between a cation membrane and the anion face of a bipolar membrane and fed with a liquid comprising water, at least one acid compartment located between the cation face of said bipolar membrane and an anion membrane and fed with a liquid comprising water, and at least one salt compartment located between said anion membrane and a second cation membrane, and fed with an aqueous alkali metal chloride solution, whereby passage of a direct current through said water splitter causes acidification of said aqueous alkali metal chloride solution and acidification of said liquid comprising water in said acid compartment, basification of said liquid comprising water in said base compartment and transfer of alkali metal cations from said aqueous salt solution to said liquid comprising water in said base compartment, and transfer of chloride ions from said aqueous salt solution to said liquid comprising water in said acid compartment; and withdrawing a liquid comprising aqueous alkali metal hydroxide from said base compartment, a liquid comprising aqueous hydrogen chloride from said acid compartment and an acidified aqueous salt solution comprising between 0.6 and 13 moles of HCl per 100 moles of alkali metal chloride from said salt compartment to provide said feed.

2. A process according to claim 1, characterized in that said alkali metal chloride is sodium chloride.

3. A process according to claim 2 characterized in that said aqueous sodium chloride solution is an essentially saturated solution.

4. A process according to claim 1, characterized in that said alkali metal chloride is potassium chloride.

5. A method according to any one of claims 1 to 4 characterized in that the residence time of said aqueous alkali metal chloride solution in said salt compartments is sufficient to produce feed having a concentration between 1 and 10 moles of HCl per 100 moles of alkali metal chloride.

6. A process according to any of claims 1 to 5 characterized in that the liquid comprising aqueous alkali metal hydroxide withdrawn from said base compartments has a concentration of between 5 and 40 weight percent of alkali metal hydroxide.

7. A method according to any one of claims 1 to 6 characterized in that at least two three-compartment electrodialytic water splitters are employed, the liquid comprising aqueous alkali metal hydroxide withdrawn from the base compartments of a first water splitter being the liquid comprising water fed to the base compartments of a second electrodialytic water splitter.

8. A method according to any one of claims 1 to 7 characterized in that the acidified aqueous salt solution withdrawn from the salt compartments of the first water splitter is the aqueous alkali metal chloride solution fed to the salt compartment of the second water splitter.

9. A method according to any one of claims 1 to 8 characterized in that the acidified aqueous alkali metal chloride solution is fed as electrolyte to the anode compartment of a diaphragm or membrane electrolytic cell.

## Patentansprüche

1. Verfahren zur Herstellung einer angesäuerten wäßrigen Alkalimetallchloridbeschickung mit zwischen 0,6 und 13 Mol HCl pro 100 Mol Alkalimetallchlorid für eine Anodenkammer einer Diaphragma- oder Membraneelektrolysezelle, dadurch gekennzeichnet, daß diese Beschickung in einem elektrodialytischen Waserzersetzer mit einer Anode und einer Kathode hergestellt wird, zwischen denen wenigstens zwei kationische Membranen, wenigstens eine bipolare Membran und wenigstens eine anionische Membran angeordnet sind, wodurch wenigstens eine zwischen einer kationischen Membran und der anionischen Seite einer bipolaren Membran angeordnete und mit einer wasserhaltigen Flüssigkeit beschickt basische Kammer, wenigstens eine zwischen der kationischen Seite der bipolaren Membran und einer anionischen Membran angeordnete und mit einer wasserhaltigen Flüssigkeit beschickte Säurekammer und wenigstens eine zwischen der anionischen Membran und einer zweiten kationischen Membran angeordnete und mit einer wäßrigen Alkalimetallchloridlösung beschickte Salzkammer definiert werden, wobei ein direkter Stromdurchgang durch den Wasserzersetzer eine Ansäuerung der wäßrigen Alkalimetallchloridlösung und eine Ansäurerung der wasserhaltigen Flüssigkeit in der sauren Kammer, eine Basischmachen der wasserhaltigen Flüssigkeit in der basischen Kammer und einen Transport von Alkalimetallkationen von der wäßrigen Salzlösung zu der wasserhaltigen Flüssigkeit in der basischen Kammer und ein Transport von Chloridionen aus der wäßrigen Salzlösung zur der wasserhaltigen Flüssigkeit in der sauren Kammer verursacht wird, und wobei eine wäßrige Alkalimetallhydroxidlösung

aus der basischen Kammer, eine wäßrige Chlorwasserstoff enthaltende Lösung aus der Säurekammer und eine wäßrige, zwischen 0,6 und 13 Mol HCl pro 100 Mol Alkalimetallchlorid enthaltende Salzlösung aus der Salzkammer entnommen werden, um die Beschickung bereitzustellen.

2. Verfahren nach Anspruch 1, dadurch gekennzeichnet, daß das Alkalimetallchlorid Natriumchlorid ist.

3. Verfahren nach Anspruch 2, dadurch gekennzeichnet, daß die wäßrige Natriumchloridlösung eine im wesentlichen gesättigte Lösung ist.

4. Verfahren nach Anspruch 1, dadurch gekennzeichnet, daß das Alkalimetallchlorid Kaliumchlorid ist.

5. Verfahren nach einem der Ansprüche 1 bis 4, dadurch gekennzeichnet, daß die Verweilzeit der wäßrigen Alkalimetallchloridlösung in den Salzkammern ausreichend ist, um eine Beschickung mit einer Konzentration zwischen 1 und 10 Mol HCl pro 100 Mol Alkalimetallchlorid herzustellen.

6. Verfahren nach einem der Ansprüche 1 bis 5, dadurch gekennzeichnet, daß die aus den basischen Kammern entnommene wäßriges Alkalimetallhydroxid enthaltende Lösung eine Konzentration zwischen 5 und 40 Gew.-% Alkalimetallhydroxid hat.

7. Verfahren nach einem der Ansprüche 1 bis 6, dadurch gekennzeichnet, daß wenigstens zwei elektrodialytische Dreikammern-Wasserzersetzer angewendet werden, wobei die aus der basischen Kammer eines ersten Wasserzersetzers entnommene wäßriges Alkalimetallhydroxid enthaltende Lösung die Wasser enthaltende Lösung ist, mit der die basische Kammer eines zweiten elektrodialytischen Wasserzersetzers beschickt wird.

8. Verfahren nach einem der Ansprüche 1 bis 7, dadurch gekennzeichnet, daß die aus den Salzkammern des ersten Wasserzersetzers entnommene angesäuerte wäßrige Salzlösung die wäßrige Alkalimetallchloridlösung ist, mit der die Salzkammern des zweiten Wasserzersetzers beschickt werden.

9. Verfahren nach einem der Ansprüche 1 bis 8, dadurch gekennzeichnet, daß die angesäuerte wäßrige Alkalimetallchloridlösung als Elektrolyt für die Anodenkammer einer Diaphragma- oder Membraneelektrolysezelle beschickt wird.

**Revendications**

1. Procédé de production d'une charge de chlorure de métal alcalin aqueux acidifié comprenant entre 0,6 et 13 moles de HCl pour 100 moles de chlorure de métal alcalin pour un compartiment anodique d'une cellule électrolytique à diaphragme ou à membrane, caractérisé en ce qu'on produit la charge dans un appareil de décomposition de l'eau à électrodialyse comprenant une anode et une cathode, entre lesquelles sont placées au moins deux membranes cationiques, au moins une membrane bipolaire, et au moins une membrane anionique, délimitant ainsi au moins un compartiment basique placé entre une membrane cationique et la face anionique d'une membrane bipolaire et rempli d'un liquide comprenant de l'eau, au moins un compartiment acide placé entre la face cationique de la membrane bipolaire et une membrane anionique et rempli d'un liquide comprenant de l'eau, et au moins un compartiment salin placé entre la membrane anionique et une seconde membrane cationique, et rempli d'une solution aqueuse de chlorure de métal alcalin, grâce à quoi le passage d'un courant continu à travers l'appareil de décomposition de l'eau provoque l'acidification de la solution aqueuse de chlorure de métal alcalin et l'acidification du liquide comprenant de l'eau dans le compartiment acide, l'alcalinisation du liquide comprenant de l'eau dans le compartiment basique et le transfert de cations de métal alcalin de la solution aqueuse de sel vers le liquid comprenant de l'eau dans le compartiment basique, et le transfert d'ions chlorures de la solution aqueuse de sel vers le liquide comprenant de l'eau dans le compartiment acide; et le retrait d'un liquide comprenant de l'hydroxyde de métal alcalin aqueux du compartiment basique, d'un liquide comprenant de l'acide chlorhydrique aqueux du compartiment acide et d'une solution de sel aqueuse acidifiée comprenant entre 0,6 et 13 moles de HCl pour 100 moles de chlorure de métal alcalin du compartiment salin pour produire la charge.

2. Procédé selon la revendication 1, caractérisé en ce que le chlorure de métal alcalin est le chlorure de sodium.

3. Procédé selon la revendication 2, caractérisé en ce que la solution aqueuse de chlorure de sodium est une solution essentiellement saturée.

4. Procédé selon la revendication 1, caractérisé en ce que le chlorure de métal alcalin est le chlorure de potassium.

5. Procédé selon l'une quelconque des revendications 1 à 4, caractérisé en ce que le temps de séjour de la solution aqueuse de chlorure de métal alcalin dans les compartiments salins est suffisante pour produire une charge présentant une concentration comprise entre 1 et 10 moles de HCl pour 100 moles de chlorure de métal alcalin.

6. Procédé selon l'une quelconque des revendications 1 à 5, caractérisé en ce que le liquide comprenant de l'hydroxyde de métal alcalin aqueux retiré des compartiments basiques présente une concentration de 5 à 40 pourcent en poids d'hydroxyde de métal alcalin.

7. Procédé selon l'une quelconque des revendications 1 à 6, caractérisé en ce que l'on emploie au moins deux appareils de décomposition de l'eau à électrodialyse à trois compartiments, le liquide comprenait de l'hydroxide de métal alcalin aqueous retiré des compartiments basiques d'un premier appareil de décomposition de l'eau étant le liquide comprenant de l'eau introduit dans les compartiments basiques d'un second appareil de décompositon de l'eau à électrodialyse.

8. Procédé selon l'une quelconque des revendications 1 à 7, caractérisé en ce que la solution aqueuse de sel acidifiée retirée des compartiments salins du premier appareil de décomposition de l'eau est la solution aqueuse de chlorure de métal alcalin introduite dans les compartiments salins du second appareil de décomposition de l'eau.

9. Procédé selon l'une quelconque des revendications 1 à 8, caractérisé en ce que l'on introduit la solution aqueuse de chlorure de métal alcalin acidifiée comme électrolyte dans le compartiment anodique d'une cellule électrolytique à diaphragme ou à membrane.

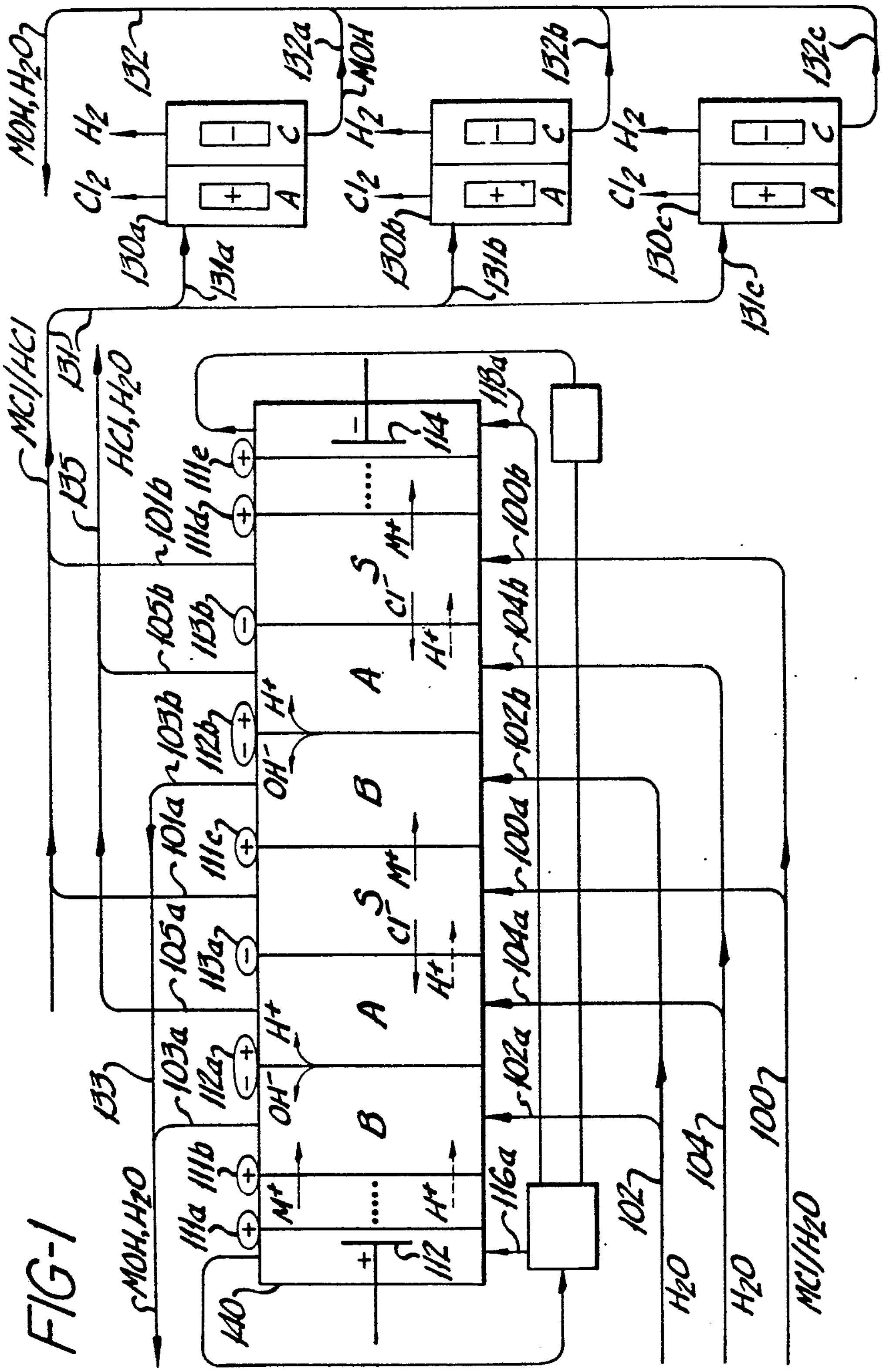
MOH, $H_2O$
MCl/HCl
HCl, $H_2O$
MOH
$Cl_2$
$H_2$
$H_2O$
MCl/$H_2O$
A
B
S
C
$M^+$
$H^+$
$OH^-$
$Cl^-$
100
100a
100b
101a
101b
102
102a
102b
103a
103b
104
104a
104b
105a
105b
111a
111b
111c
111d
111e
112
112a
112b
113a
113b
114
116a
116b
130a
130b
130c
131
131a
131b
131c
132
132a
132b
132c
133
135
140

FIG-1

FIG-2

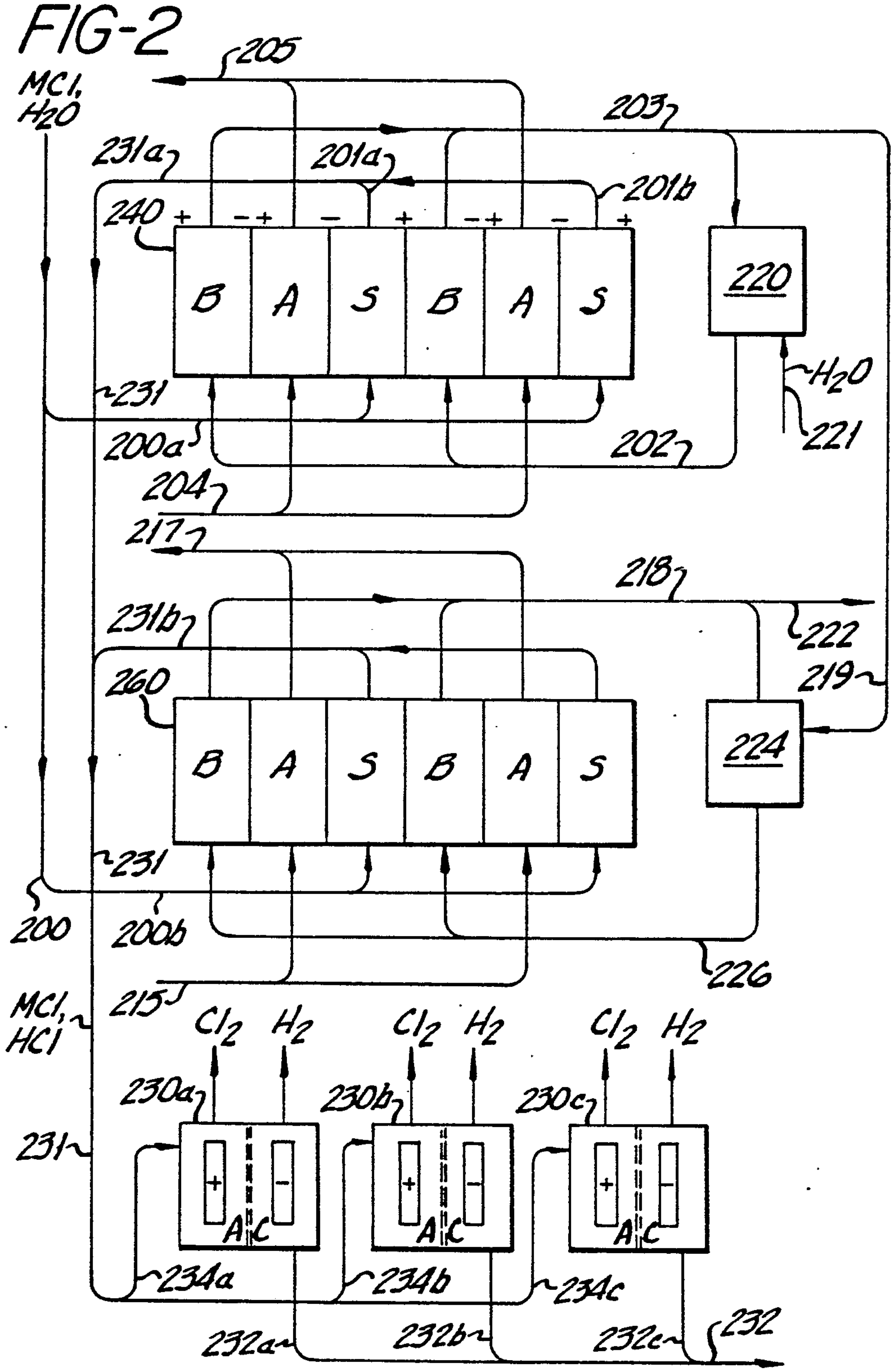
MCl, $H_2O$
205
203
231a
201a
201b
240
B
A
S
B
A
S
220
$H_2O$
221
231
200a
202
204
217
218
231b
222
219
260
224
226
200
200b
215
MCl, HCl
$Cl_2$
$H_2$
230a
230b
230c
231
234a
234b
234c
232a
232b
232c
232

FIG-3

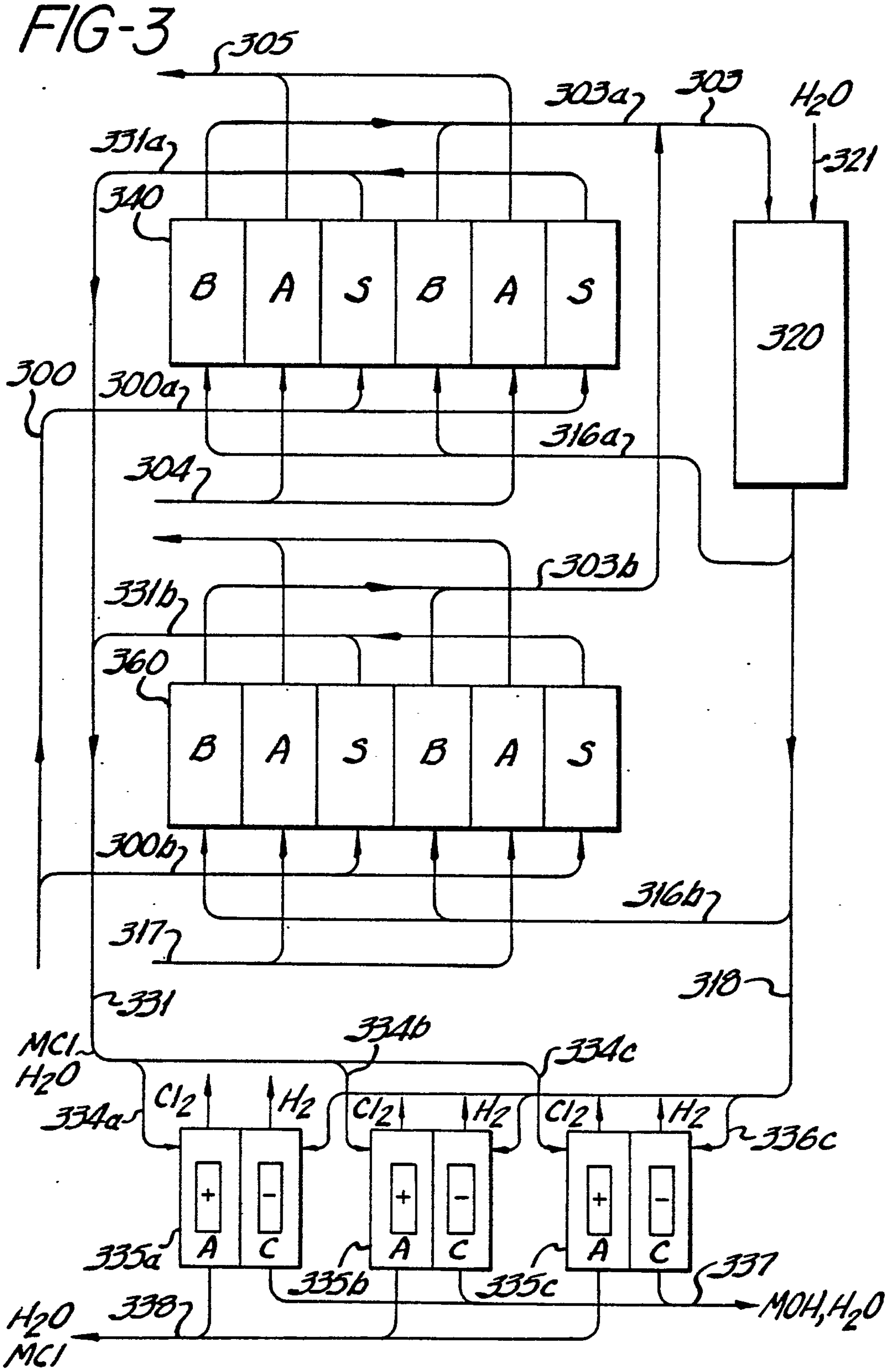
305
303a
303
$H_2O$
331a
321
340
B
A
S
B
A
S
320
300
300a
316a
304
303b
331b
360
B
A
S
B
A
S
300b
316b
317
318
331
334b
MCl
$H_2O$
334c
$Cl_2$
$H_2$
$Cl_2$
$H_2$
$Cl_2$
$H_2$
334a
336c
+
−
+
−
+
−
A
C
A
C
A
C
335a
335b
335c
337
$H_2O$
338
MOH, $H_2O$
MCl

FIG-4

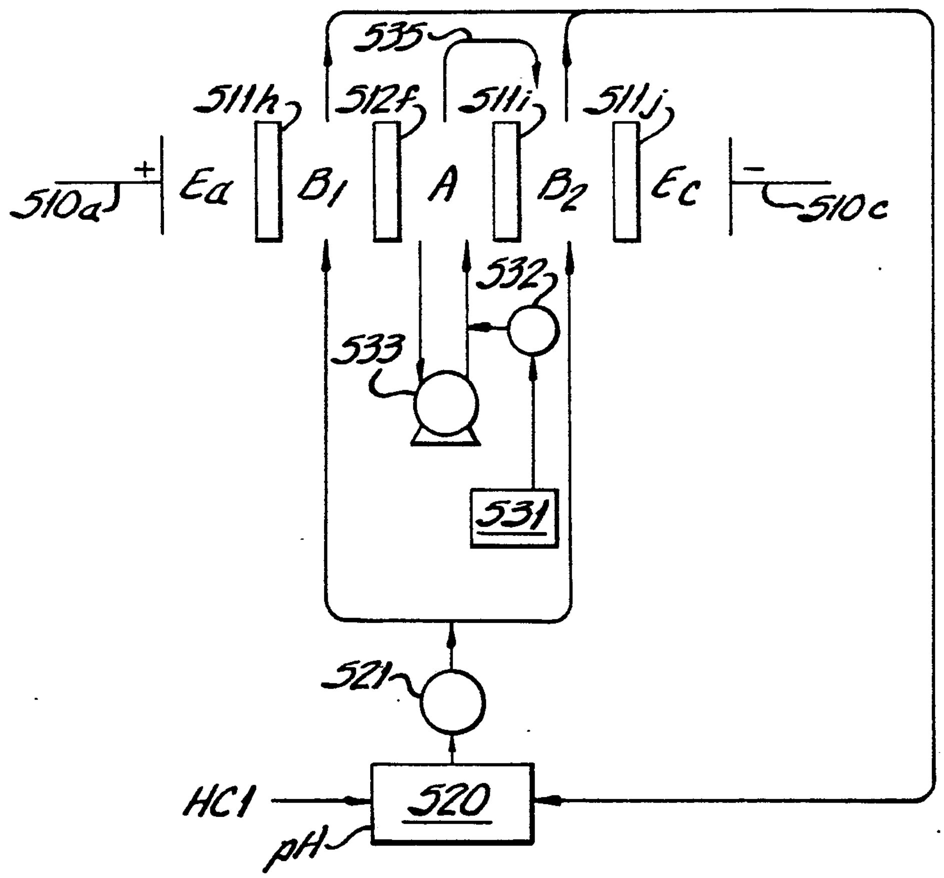
535
511h
512f
511i
511j
+
Ea
B1
A
B2
Ec
−
510a
510c
532
533
531
521
HCl
520
pH

FIG-5

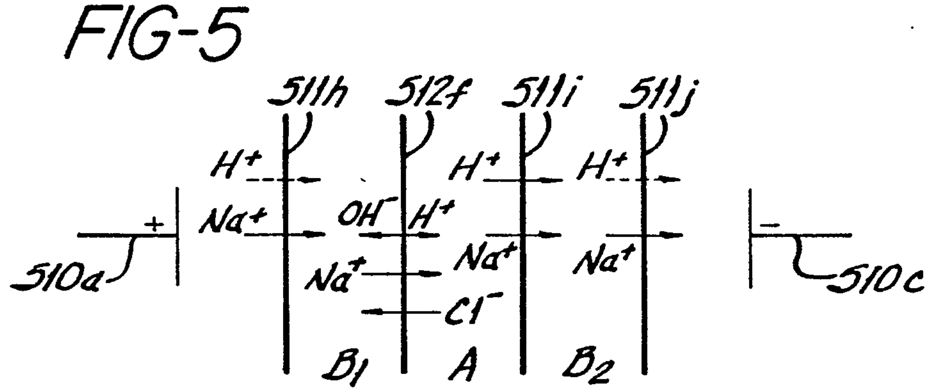
511h
512f
511i
511j
H+
H+
H+
Na+
OH−
H+
Na+
Na+
Na+
Cl−
+
−
510a
510c
B1
A
B2

FIG-6

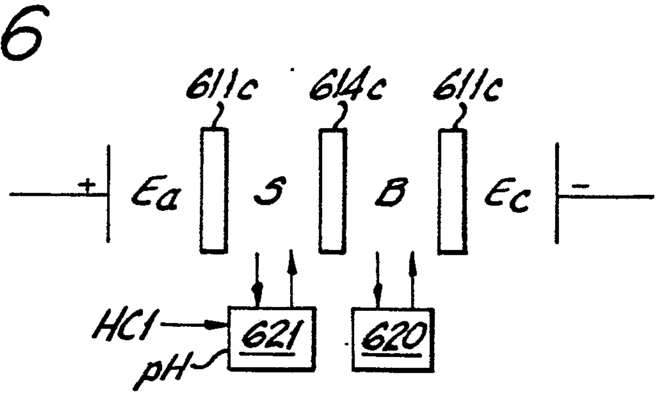


FIG-7

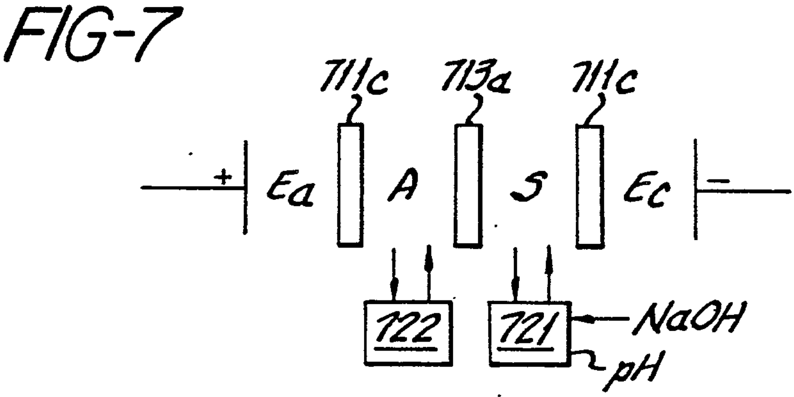


FIG-8